# EUROPEAN PATENT APPLICATION

(11) **EP 3 392 652 A1**
(43) Date of publication of application: **24.10.2018**
(21) Application number: 17382216.4
(22) Date of filing: 21.04.2017
(51) Int. Cl.: G01N 29/04, G01N 29/07, G01N 29/22, G01N 29/265, G01N 29/44, F03D 17/00

(54) **METHOD FOR INSPECTING MATERIALS AND AERIAL VEHICLE TO IMPLEMENT SAID METHOD**

(71) Applicant: Arborea Intellbird S.L., 37185 Villamayor (Salamanca) (ES)
(72) Inventor: BERNABEU GONZALEZ, Carlos, 37185 Villamayor (ES)
(74) Representative: Hernández Hernández, Carlos

(57) **Abstract**

A method for inspecting materials, aimed at detecting structural defects in a test object, implemented using a Remotely Piloted Aircraft System (RPAS) equipped at least with impulse means to apply a force on the test object's surface, means to register the emitted sound response and means to register the position at which the sound response was emitted. The RPAS applies successive hits to the test object, sound and position data obtained are processed into a numerical table, the values of which correspond to successive sound responses and are indicative of the presence or not of a structural defect in the points of the test object corresponding to said sound responses, said table can be converted into a graphic pattern and superimposed to a map of the test object.

## Description

### Technical Field

The invention relates to inspecting materials for the purpose of detecting failures, in particular to a Non-destructive testing method using acoustic emission and to an aerial vehicle for implementing the method.

### Background Art

Failure of an industrial material may cause hazard, damages and economic loss as a result of production stoppages, delays and accidents. Non-Destructive testing (NDT) can anticipate structural problems or detect them at an early stage. One of its advantages is that it does not damage the material to which the test is applied. For these reasons, NDT is widely used in all industrial sectors, being typically performed in pressure vessels, pipelines, ships, airplanes and energy-production facilities.

NDT based on acoustic emissions is a well-known technique, involving the application of an input to a test surface, which produces a vibration, and analyzing the sound emitted by the test surface. The input can be mechanical (for instance, the tap of a striker) or electronic (for instance, in the form of infrasounds or ultrasounds). Acoustic NDT will reveal defects which cannot be seen or are difficult to appreciate by the eye. The basic acoustic emission NDT consists in tapping an object at different points and it is known as "tap coin test".

One of the objects to which NDT based on acoustic emissions and specifically tap coin tests can be applied is wind turbine blades. Some wind turbine blades comprise a structural beam which runs internally along most part of the spanwise length of the blade. The beam is normally joined to the blade's interior walls using adhesive. The more common bonding defects are: a) zones where there is no adhesive, b) zones with adhesive in only one of the surfaces, c) zones where there is adhesive in both surfaces, but due to improper curing or for other reasons, there is no adherence. Whilst zones with no adhesive at all can be detected by thermal testing, zones with adhesive in only one of the surfaces or in both but with no adherence cannot be detected by such testing, so normally acoustic-emission NDT techniques are used for this purpose. Adhesive is also used to join the turbine blade's two half-shelves, by applying it along the leading and trailing edges thereof, this bonding presenting the same problems outlined above. In the manufacturing process of a blade, air bubbles may occur between the different composite layers. Also, layers of a composite blade can delaminate under stress, a defect which is very difficult to detect by thermal testing, particularly in blades built with thick supporting walls instead of with structural beam.

Unbonding of the beam or the half-shelves or of any other bonded structural blade component, or the presence of air bubbles or delamination, can lead to a serious turbine failure or even to a fatal collapse. Therefore, a proper structural health monitoring of a turbine blade must account for these defects. It is known that technicians perform this monitoring either entering the interior of the blade for visual inspection and coin-tapping of elements; or by coin-tapping the blade's external surface. These techniques are very unreliable, because tapping can be done at a limited number of points and technicians can only rely on their visual and hearing capabilities, seriously impaired by the difficult conditions in which these inspections must be carried out, for instance the narrow room in the interior of the blade or strong winds in the exterior.

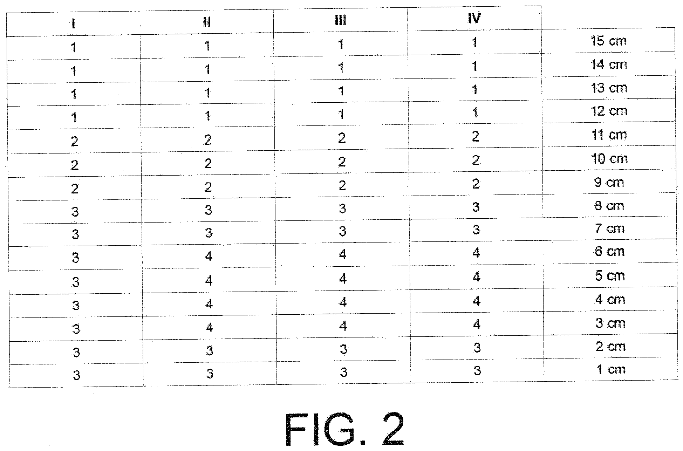

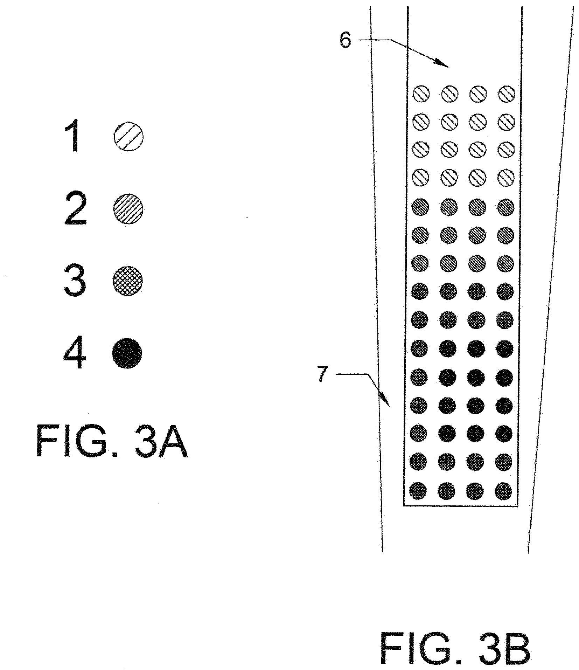

WO 2016/101953 A1 (VESTAS WIND SYSTEMS A/S), 30 June 2016 (30.06.2016), pages 8,9; discloses a method, device and system for assessing bonds between components in a wind turbine blade. The blade must be removed from the turbine body and a test site prepared at ground level, where the blade is supported by two elements (24, 26, FIG. 2) to keep it off ground contact. Test is carried out in the interior of the blade (page 9, par. 4) by means of a vehicle (34) which travels in a straight line along a predetermined path ("test surface") (40) formed by one of the inspected structural components, applying successive impulses to predetermined points or "test sites" (54) (FIG. 3).

US 2013/300855 A1 (GENERAL ELECTRIC CO) 14 November 2013 (14.11.2013), abstract; discloses an internal inspection system for rotor blade which uses a vehicle which is raised and lowered inside the blade by a cable (210) requiring pre-installation of supporting elements (214, 216) in the blade.

Against this background, the inspection method hereby claimed does not require removing the blade, as it is performed by way of an independent vehicle which operates in the blade's outer surface. Since the operation takes place outside the blade, it requires no guidance or support elements to be pre-installed in the blade, nor access of a technician to the blade in order to perform any operation such as introducing the vehicle inside the blade. Likewise, the fact that the method is performed with an independent vehicle makes it possible to use it for acoustic testing of other objects.

### Summary of invention

The invention refers, in a first aspect, to a method for detecting structural defects in a test object. The test object can be any object liable to suffer structural problems that can generally be detected by acoustic emission Non-Destructive Testing (cracks, air bubbles and welding defects) such as windmill turbine blades, windmill towers, aircraft fuselages, ship hulls, industrial chimneys or fuel tanks.

In a second aspect, the invention refers to a vehicle to implement the claimed method. This vehicle is a Remotely Piloted Aircraft System (RPAS). The vehicle is totally independent from the object in which the test is carried out, in the sense that no supporting, guiding or any other kind of structures must be pre-installed in the test object. This is advantageous from the point of view of the manufacturing of the test object, in that the manufacturer does not have to take care of installing any component specifically directed to permit future safety health monitoring of the object.

The claimed RPAS carries a test equipment adequate to performing the method, which comprises: impulse means, configured to apply a vibration to the test object; sound detection means, to register the test object's sound response; position detection means, to determine the specific point at which each sound response was emitted; time recording means, to determine the moment at which each sound response was emitted; data processing means to process data as it is obtained by the different detection means and data storage means.

The impulse means comprise at least one vibration unit. The impulse means can be advantageously arranged in sets of several units, to cover the whole test object's width or a significant part thereof, saving flying time to the vehicle. The sound detection means can be standard sound sensors. Each vibration unit, where there is more than one, is associated to a sound sensor. The position detection means comprise at least an odometer. Also, position detection means may comprise navigation devices. The time recording means comprise a watch located in the microprocessor. The processing means are at least a standard microprocessor, although an on-board computer is also envisaged.

The claimed method comprises: reaching the test object's surface with the RPAS, using the RPAS to apply an impulse force to a point in the test object's surface, using the RPAS's sound detection means to register the sound emitted by the test object in response to the applied impulse force, using the RPAS' time recording and position detection means to register the time at which said sound response was emitted and the RPAS's position in respect of the test object's surface at the time said sound response was emitted and finally assigning informatically to said sound response a numerical value which is indicative of the presence or not of a structural defect in said point of the test object.

To put the method into practice, a technician directs the RPAS via remote control to the test's starting point. In another embodiment, the RPAS flights according to a programmed autonomous flight. The microcontroller commands the impulse means to hit the test object's surface according to a pre-established time frequency.

Each time an impulse means hits the test object's surface a shock wave is produced, penetrating the test object's surface and generating an acoustic response, which is measured and sent to microcontroller, which links it to the time in which such sound measurement has taken place. Also, the physical point of the test object at which the hit has taken place and the different measurements relating to RPAS position are registered and sent to microcontroller, linking it to same point in time. The microcontroller generates one single registration grouping all the registrations received for each hit of the impulse means. For each successive hit, another registration is created. These sets of data registrations are sent to the solid state drive.

Data sets stored in the solid-state drive are processed by data-processing means. Sound measurements are converted into numeric digital values and compared with reference numeric digital values. The data processing means compare real test sound measurements and reference sound measurements, assigning numerical reference values to real test sound measurements.

The method determines at which specific physical point of the test object each sound measurement has been obtained, by crossing each sound measurement with the corresponding position registrations and showing the results in the form of a numerical table. The method further includes translating the numeric table into a graphic pattern and to superpose it on to a map of the test object, showing in an easy to analyse manner where the problematic areas are located in the test object.

Therefore, the claimed method, using the claimed vehicle, makes it possible to detect with a high degree of accuracy structural problems which otherwise would have remain unknown or would have been difficult to detect. Likewise, once the problems have been detected, the specific way in which the problematic zones are represented allows a quick identification by technicians, facilitating the adoption of the appropriate measures.

### Brief description of drawings

FIG. 1 is a perspective view of the vehicle for performing the inspection method.
FIG. 2 is the representation of a numeric table containing values obtained in a test measurement.
FIG. 3A is an example of graphic codes used in the elaboration of a graphic pattern FIG. 3B is a graphic pattern superposed on to a map of the test object.

### Description of embodiments

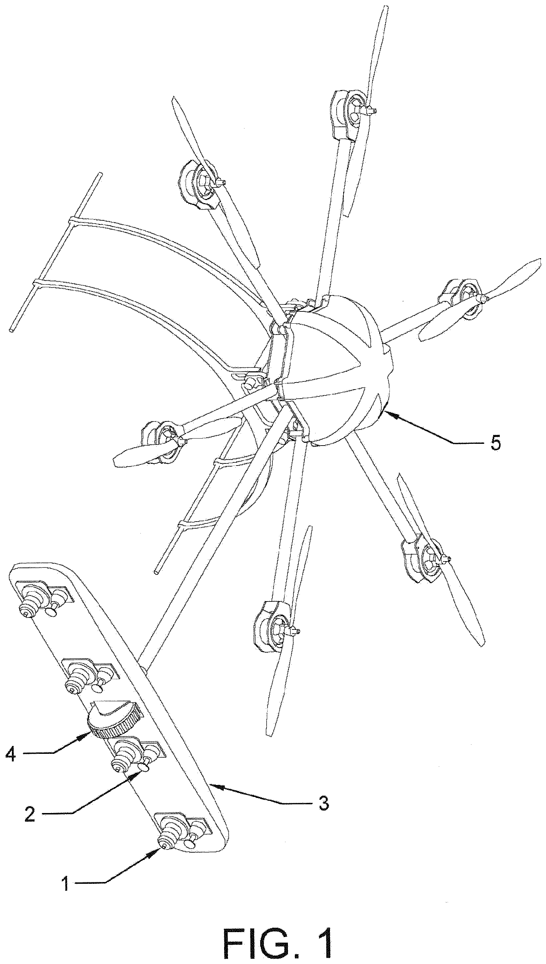

FIG. 1 is a representation of a vehicle to be used in the method. The vehicle of this embodiment is a standard Remotely Piloted Aircraft System (RPAS). The RPAS carries test equipment to implement the method. The test equipment is mounted on the RPAS' chassis and comprises: Impulse means, configured to apply a vibration to the test object; sound detection means, to register the test object's sound response; position detection means, to determine the specific point at which each sound response was emitted; time recording means, to determine the moment at which each sound response was emitted; data processing means to process data as it is obtained by the above-mentioned means and data storage means.

The impulse means comprise at least one vibration unit, which can be a standard mechanical striker or a standard electronic sound emitter. The example shown in FIG. 1 is equipped with four mechanical strikers (1) in a row, attached to a support element (2). With this arrangement, the strikers' (1) span covers the usual length of a turbine blade's structural beam. Different numbers of strikers (1) and different lengths of the support element (2) are possible, to cover a wider or narrower length depending of the type of test object or other inspection needs.

The sound detection means in this embodiment are standard sound sensors (3). Each striker (1) has an associated sound sensor (3).

The position detection means comprise at least a mechanical or electronic odometer (4), preferably attached to the support element (2). Position detection means also comprise the following standard RPAS's navigation equipment, housed in the RPAS' central unit (5), i.e. the part where a standard RPAS' power and control equipment is housed: a barometer, a satellite-based positioning device and a wireless inertial measurement unit (WIMU) comprising at least one gyroscope, one accelerometer and one magnetometer. The principal position detection component is the at least one odometer (4), which serves to determine the physical point at which the vibration has been applied. The other above-mentioned position detection means in this embodiment are auxiliary, with the purpose of getting a higher precision in the test, since, as it is known to the expert in the field, such navigation equipment traces the exact position of the aerial vehicle and therefore, will permit the technician in charge of processing the data obtained in the test to determine if the RPAS at some point deviated from the desired course, allowing him to make the necessary corrections in the measurements obtained.

The processing means are a standard microprocessor. The time recording means comprise the microprocessor's watch. In another embodiment, the processing means further comprise an on-board computer. The data storage means are preferably a solid-state drive. All said components are housed in the RPAS' central unit (5).

To implement the method, a technician locates himself by the test object. In this embodiment, the test object is a windmill turbine blade with a structural beam, the test being aimed at detecting bonding defects in the structural beam. The windmill has been stopped for testing purposes, with the blade tipping to the ground. The test will start in the blade's area closest to the ground and the RPAS will proceed upwards.

Via remote control, the technician directs the RPAS to the blade. The odometer (4) must be in contact with the test's surface all the time. The technician starts the RPAS' strikers (1), which will be ordered by the microcontroller to hit the surface along the vehicle's path according to a pre-established time frequency. An acceptable time frequency for this embodiment can be a hit every 0,10 seconds. The technician guides the RPAS to cover the blade area which has been determined in the specific structural health monitoring schedule applicable to the test object. In another embodiment, the RPAS' makes an autonomous flight, whereby the control unit is programmed according to a predetermined flight path to cover the desired inspection area.

What takes place now in the method is basically a data acquisition process, whereby signals that measure real world conditions (in the instance, sound response in a physical point of the test object's surface) are sampled and the resulting samples converted into digital numeric values that can be manipulated by a computer. Thus, each time a striker (1) hits the blade's surface a shock wave is produced, penetrating the blade's surface and generating an acoustic response. The sound sensor (2) associated to the striker (1) measures that acoustic response, generates a sound measurement sub-registration and sends it to the microcontroller. The microcontroller, using its watch, links that sub-registration to the exact time in which the sound measurement has taken place. Simultaneously, the odometer (4) measures the physical point at which the hit has taken place, generates a position sub-registration and sends it to the microcontroller, which links it to the above-mentioned point in time. Also, simultaneously, the barometer, the satellite-based positioning device and the sensors integrated in the WIMU create each a specific sub-registration referring to the position of the RPAS and send it to the microcontroller, which links it to the above-mentioned point in time. The microcontroller generates one single registration grouping all the sub-registrations received. This registration is sent to the solid-state drive.

The above-described process, resulting in one data registration made up of a set of sub-registrations, refers to a single hit of one of the four strikers (1) of the RPAS. Such process described will occur in the same way for every successive hit of that same striker (1). Therefore, a complete test of a test object by an RPAS in an embodiment with four strikers (1) will result in four sequences of registrations, each registration being made up of a set of sub-registrations referring to a vibration applied by one of the strikers (1).

Once the desired inspection area in the inspection object has been covered, the vehicle returns to ground. Now the data set stored in the solid-state drive must be processed. In one embodiment, this processing is done by the on-board computer with an appropriate software. In another embodiment, the technician sends the data set to a test computer with same software. This transmission can be done by a wireless adapter. The test computer can be located at the test ground or it can be located at the inspection company's site, where data set can be processed whilst the technician on the ground moves with the vehicle onto another test object. In another embodiment, the data set is transmitted wirelessly to the test computer in real time so that it can be processed straight away and preventive or correction measures adopted immediately if the circumstances of the case so advise.

The first data to be processed are the sound measurements sub-registrations. To this effect, the first step performed by the software is converting each sound measurement into a numeric digital value, which is a basic step in a standard data acquisition process.

Next, the obtained set of numeric digital values are compared with reference numeric digital values. It will now be described how the reference numerical digital values can be obtained. This operation does not integrate one of the sequential steps of the method, in the sense that when the claimed method is performed, the operation to obtain the reference values has already been carried out at some point in the past. The reference values were at that time entered in the software for future use in test operations and therefore, when a particular test operation is performed, the reference values are readily available. The reference values correspond to a range of sound responses emitted by a reference object. The reference object must be of the same kind of the test object and is chosen because it presents the same sort of structural problems at which the test is directed. In this embodiment, the reference object would be a turbine blade with a structural beam suffering bonding problems. When a turbine is removed, for instance for maintenance purposes, the inspection company can conveniently take this opportunity to carry out the reference measurements. To do the reference measurements on this blade, a technician, by a simple tap coin test in the blade's surface and if need be, by entering the blade, will be able to mark at least a point where the bonding is in good condition, at least a point with adhesive in both surfaces but no adherence, at least a point with no adhesive in one of the surfaces, and at least a point with no adhesive at all. Once these points have been marked, each of them is excited using the same vibration means of the test vehicle to be used in future tests, and with the same force. The sound obtained at each point is measured by a sensor. It must be noted that a sound that will be measured in a future real condition test may not have the same exact frequency of the corresponding reference measurement. For instance, in a good bonding point measured as a reference, the adhesive's thickness may not be the same as in a good bonding point of future real test object, so the respective sound measurements will slightly differ. This factor is taken into account to assign numerical reference values to the reference sound measurements, in that a numerical reference value will comprise a reference sound measurement plus a range of frequencies above and below, a range that will be evident to the expert taking into account the nature of the test object. In this embodiment, the reference values assigned are: 1 for "good bonding point", 2 for "point with adhesive in both surfaces but no adherence", 3 for "point with adhesive in only one of the surfaces" and 4 for "point with no adhesive at all".

The next step in the sequence of the method entails informatically comparing on the one hand a real test sound measurements and on the other, the reference sound measurements, assigning a reference value from 1 to 4 to said real test sound measurements.

The next step, carried out by the computer, is to determine at which specific physical point of the test object each sound measurement has been obtained. This is done by crossing each sound measurement with its corresponding position sub-registrations. The result of this operation is a numerical table such as the one represented in FIG. 2. In this table, the roman numerals I to IV on the top row correspond to the four strikers (1) carried by the RPAS of this embodiment. The metrical values on the left column indicate the physical location of the successive zones where the sound measurements were taken. Since the test is aimed at detecting bonding defects in a blade's structural beam and the RPAS is proceeding upwards along a blade pointing to the ground, the indication "1 cm" in FIG. 2 corresponds to the beginning of the structural beam at its end pointing to the ground. Each column of numbers indicates the values assigned to each of the successive hits of the corresponding striker (1). A table obtained according to the claimed method will show the complete bonding condition of the blade, so far as the structural beam area is concerned. However, for easy of representation, the table shown in FIG. 2 corresponds to only 15 cm. of the blade's length. By looking at this table, it can be determined that from 3 cm to 6 cm the blade presents a zone where there is no adhesive, as indicated by values of 4, surrounded by a zone where adhesive is present only in one of the surfaces, as indicated by values of 3.

The method further includes converting the numeric table of FIG. 2 into a graphic pattern which is superposed on to a map of the test object. To this end, each numerical reference value has previously been assigned a graphic code. FIG. 3A shows an example of graphic codes assigned to the numerical reference values 1 to 4. FIG 3B represents a partial map of the blade (7), showing the structural beam (6), where a graphic pattern corresponding to FIG. 2 table has been superposed. Therefore, the information provided by the image in FIG. 3B is the same as in the table of FIG. 2, but in a format which facilitates examination by technicians, as it is made in a graphical mode and with reference to a map of the real test object.

In other embodiments, the claimed method, using the claimed vehicle, is performed on test objects different from the blade turbine referred to in the preceding embodiment. Alternative objects can be any objects liable to suffer structural problems that can generally be detected by acoustic emission Non-Destructive Testing, like cracks, air bubbles and welding defects. By way of example, a test object can be a windmill tower, an aircraft's fuselage, a ship's hull, an industrial chimney or a fuel tank. The test would be implemented in the same steps, using and RPAS with the same equipment as has been described. Only minor adaptations, evident for the expert, will be needed to adapt the choice of vehicle's impulse means to the test object's features (for instance, installing more or less vibration units depending of test object's dimensions, or a shorter or longer support element (2). The numerical reference values will be obtained by testing a reference object of the desired kind.

### Reference signs list

(1) strikers, (2) sound sensors, (3) support element, (4) odometer, (5) RPAS central unit, (6) internal structural beam in a map of the blade (7) map of the blade

### Citation list

WO 2016/101953 A1 (VESTAS WIND SYSTEMS A/S), 30 June 2016 (30.06.2016)
US 2013/300855 A1 (GENERAL ELECTRIC CO) 14 November 2013 (14.11.2013),

## Claims

1. A method for detecting structural defects in a test object, the method comprising: a) reaching the test object's surface with a Remotely Piloted Aircraft System (RPAS), b) using the RPAS to apply an impulse force to a point in the test object's surface, c) using the RPAS to register the sound emitted by the test object in response to the applied impulse force, d) using the RPAS to register the time and location of the point at which said sound response was emitted, and e) assigning informatically a numerical value to said sound response.

2. The method of claim 1, wherein the numerical value corresponds to one of a set of pre-obtained reference numerical values.

3. The method of claim 1, further comprising creating a table of numerical values, wherein numerical values correspond each to a sound response and are arranged according to the location of the test object's point in which the corresponding sound response was emitted.

4. The method of claims 2 and 3, further comprising assigning a graphic code to each pre-obtained reference numerical value and converting the numerical table into a graphic pattern.

5. The method of claim 4, further comprising superimposing the graphic pattern to a map of the test object.

6. A Remotely Piloted Aircraft System (RPAS) for implementing the method of claim 1, comprising: a) impulse means, b) sound detection means, c) time recording means and d) position detection means.

7. The RPAS of claim 6, further comprising data processing means and data storage means.

8. The RPAS of claim 6, wherein the impulse means comprise at least one vibration unit, the sound detection means comprise at least one sound sensor (2) and the position detection means comprise at least one odometer (4).
